# EUROPEAN PATENT APPLICATION

(11) **EP 4 120 119 A1**
(43) Date of publication of application: **18.01.2023**
(21) Application number: 21185029.2
(22) Date of filing: 12.07.2021
(51) Int. Cl.: G06K 9/00, G06K 9/62

(54) **QUANTIFYING AND ANALYZING ORGANOIDS FROM DIGITAL IMAGES**

(71) Applicant: Leibniz-Institut für Virologie, 20251 Hamburg (DE)
(72) Inventor: BREMER, Jan Peter, 22041 Hamburg (DE); KNORR, Marius Sebastian, 22529 Hamburg (DE); ALTFELD-BUNDERS, Madeleine, 20251 Hamburg (DE); ALTFELD, Markus, 20251 Hamburg (DE)
(74) Representative: Maiwald GmbH

(57) **Abstract**

A method (100) for quantifying and/or analyzing organoids from a digital image (2) of a biological sample (1), comprising the steps of:
• mapping (110), by a first neural network (3a) and/or a first section (4a) of one neural network (4), the image (2) to bounding boxes (5) that enclose instances of organoids;
• mapping (120), by a second neural network (3b) and/or a second section (4b) of the one neural network (4), for each bounding box (5), the content of this bounding box (5), and/or a work product of the first neural network (3a) and/or first section (4a) that relates to this bounding box (5), to one or more masks (6) that identify the image pixels belonging to each instance (7) of an organoid; and
• evaluating (130), from the one or more masks (6), a number (7a) of instances (7) of organoids in the image, and/or at least one physical and/or biological property (7b) of at least one instance (7) of an organoid.

## Description

The invention relates to the analysis of digital images, particularly microscope images, of biological samples with organoids.

### Background

Although animal studies have importantly contributed to our fundamental understanding of human biology, translation of fundamental findings in animal studies as treatment strategies to humans are impeded due to critical differences in genetic background and gene expression between animal models and humans. The recent development of organoid systems based on primary human cells have the potential to overcome this barrier and personalize therapeutic approaches. An organoid is an organ-like microstructure that has some physiological properties of an organ and can therefore act as a model system for the specific organ ("organ in a dish"). As organoids are derived from human primary cells, they have cellular mechanisms and growth properties comparable to those of endogenous organs and preserve "personal" traits of individuals, including epigenetic marks. Although initially laborious, experimental studies using organoid models have been optimized and with the recent availability of commercial reagents the use of organoids for research is now more accessible to research groups. These advances further allow high-throughput applications of organoid systems for a multitude of purposes including drug testing in the context of novel or personalized chemotherapies for cancer, antiviral reagents for viral infections and immune modulatory drugs for inflammation, regenerative medicine purposes and the like.

The systematic microscopic analysis of organoid cultures with respect to sought physical and/or biological properties is still a task that requires extensive manual work. Current approaches for automatic analysis of images with organoids lack generalization on the wide range of experimental settings, organoid systems and their heterogeneous phenotypes that are a critical part of the advantages of organoids.

### Objective of the invention

It is therefore an objective of the invention to improve the automatic analysis of digital images of biological samples with organoids.

This objective is achieved by a method for quantifying and/or analyzing organoids from a digital image of a biological sample using one or more neural networks, and by a method for training one or more neural networks. Further advantageous embodiments are detailed in the respective dependent claims.

### Disclosure of the invention

The invention provides a method for quantifying and/or analyzing organoids from a digital image of a biological sample.

In the course of this method, the image is mapped to bounding boxes that enclose instances of organoids by a first neural network and/or a first section of one neural network. For each bounding box, the content of this bounding box, and/or a work product of the first neural network and/or first section that relates to this bounding box, is mapped to one or more masks that identify the image pixels belonging to each instance of an organoid. This mapping is performed by a second neural network and/or a second section of the one neural network.

For example, a Mask-RCNN model may be used. In a first section, a stack of convolutional layers produces feature maps that identify regions of interest and thus serves as a region proposal network. The second section comprises two branches. In a first branch from the proposed regions, bounding boxes around object instances, as well as classes of these object instances, are determined using a stack of fully connected layers. Simultaneously, feature vectors are also fed into the other branch that is configured as a classifier network. This second branch determines the mask that identifies pixels belonging to each instance of an organoid.

The inventors have found that a network that performs said two-stage processing is trainable to generalize very well to different organoid systems, phenotypes and experimental settings. In particular, experimental settings vary much from lab to lab, so there are a lot more combinations of organoid systems from different organoids, phenotype and experimental settings that may be considered during training. Therefore, in a real experiment, the power of the network to generalize is an important factor for the accuracy of the final mask.

An accurate and reliable determination of masks in turn allows to automatically evaluate the desired physical and/or biological properties of organoids from the digital image of the sample. This saves much time that would otherwise have been spent on the manual annotation of organoids. In one example of a recently published study on the role of TNF-α in intestinal inflammation in young children, analysis of the data required one person to annotate organoids for four weeks full time. When the same data was re-analyzed using the present method, the results could be reproduced with only 15 minutes of computing time for the automatic annotation.

The speed-up is so drastic that some high-throughput studies with many conditions and images being taken become feasible for the first time. For example, an experimental analysis comparing 8 cytokines and their 28 combinations in 2 concentrations in 2 donors in 2 replicates resulting in a total of 36 different cytokine conditions adds up to over 1600 images to be analyzed. Previous approaches for automatic annotation cannot perform the instance segmentation of the organoids with a degree of accuracy sufficient for deriving dependable quantitative insights. Manual annotation of so many images is not feasible within the constraints of such a study. Automatic annotation according to the present method finishes in 75 minutes.

Moreover, the better automation of the annotation eliminates an uncertainty from the result that was inherent from subjective differences in the manual annotation results produced by different human workers. That is, results from different experiments obtained using automatic annotation are better comparable to each other than results obtained using manual annotation.

In particular, because tissues are made up by many different cells, a heterogeneity captured by organoid cultures, it is important for any quantitative analysis to capture all organoids in the sample and not miss any organoids, so as to capture the heterogeneity of the organoids within the sample.

The physical and/or biological property to be evaluated from the masks may, for example, comprise one or more of:
- a size and/or growth of the organoid;
- a shape of the border of the organoid;
- a composition of the organoid, and/or a heterogeneity thereof;
- an optical property of the organoid, and/or a heterogeneity thereof;
- a density of the organoid, and/or a heterogeneity thereof; and
- a differentiation state, and/or a proliferation state, of the organoid.

Finally, the growth kinetics of organoids is an important marker for a wide variety of biological applications.

In the mentioned example of the high-throughput study with 1600 to-be-analyzed images, the goal was to analyze the interaction between immune cells and tissue. Immune cells are normally known for their role to provide protection against viruses and bacteria. Immune cells however can also by the production of many different proteins promote inflammation and cause tissue destruction as seen in autoimmune diseases. At the same time, proteins produced by immune cells can function as growth factors for tissue cells and promote tissue regeneration after tissue damage of infection or chemotherapy. Furthermore, whether a protein produced by immune cells causes tissue damage and promotes inflammation or on the other hand enhances regeneration depends on the protein concentrations. In sum one protein produced by immune cells can have various effects. These proteins produced by immune cells are emerging as therapeutic targets to prevent inflammation or to promote tissue regeneration after damage. Organoids are excellent models to assess these pleiotropic effects. The analysis of said 1600 images ultimately revealed a synergistic effect of 2 cytokines IL-17 and IL-22, whereas IFN-γ and TNFα-〈 inhibited tissue growth as assessed in organoids. These data now provide targets to explore for regenerative medicine as well as in inflammatory diseases of the gut where these cytokines are increased.

In a second example, different candidate media for promoting organoid growth are tested and compared. As the organoid technology is relatively new, the optimal conditions for stem cells from different tissues to grow is not finally defined and improvements are continuously made. Furthermore the reagents in the medium to grow organoids needs to be of a certain quality. Again this requires substantial testing in high throughput experiments. One example is that one of the main factors essential for the propagation of intestinal organoids is a protein called Wnt, which is derived from cell lines. Wnt derived from these cell lines can greatly vary in quality, therefore we test different batches of the protein Wnt in high-throughput experiments with multiple donors over 1-2 months generating a high volume of data. These analyses need to be robustly analyzed to be able to identify Wnt of the same quality for the experiments with organoids. Robust analyses without interpreter variability of different batches of Wnt is therefore paramount to be able to conduct robust replication consistent experiments. These issues also apply to other reagents in the organoid medium. The present analysis method makes these analyses feasible.

In a third example, we have discovered another immune cell type that produces a cytokine called IL-13 in infant intestines after birth. This cytokine in organoid cultures was able to enhance growth of the intestine as well. However, high concentrations increased the production of other cytokines by epithelial cells in organoids that have been shown to mediate food allergies in children. Children suffer more from food allergies than adults and these analyses based on these high through-put organoid experiments identify targets for intervention for food allergies in children. These organoid images were manually analyzed in 2.5 weeks full time by one researcher, and in less than 10 minutes using the present automatic annotation.

The most important optical property of the organoid is darkness. Darkness is a measure for the differentiation state of a cell. A stem cell can still proliferate, and thus multiply. Once the cell has differentiated for its particular task, it cannot multiply any more. This is somewhat analogous to the manufacture of CD or DVD disks. The proliferating state of a cell corresponds to the stage of the manufacture where the plastic is still liquid, so there is still the option to make the disk larger. The differentiated state of the cell corresponds to the state of the manufacturer where the data has been punched into the plastic by pressing the glass master onto it. From that point on, it is no longer possible to make the disk larger.

The shape of the border of the organoid is a very important property for quantifying a biological activity of the organoid at the time of acquisition of the image. What the organoid is doing mostly manifests itself at its border. In particular, stem cells that are still in the proliferating state are more likely to be found at the border in buds of the organoid.

For example, diagnostics of many diseases relies on immunohistochemical analyses of biopsies to characterize the invasiveness of for example a tumor based and risk of metastasis. However this is not a dynamic analysis of the growth of, for example, a tumor. An analysis of the tumor cell proliferation using the present method can be used to quantify the proliferative capacity of a tumor using organoids derived from a small biopsy. For this standardized and fast analyses of the images are required. The present method can be used to access different growth kinetics of tumoroids derived from biopsies, which may result in a more accurate assessment for invasiveness and malignancy and therefore more accurate preoperative planning upon resection of the tumor. Organoids cultured from biopsies from a patient's tumor can be tested for their proliferative capacity, which the size of the tumor excision of tumor patients could be adapted on. On the other hand, postoperative quantification of tumoroid growth kinetics can be used to evaluate the need for re-excision.

In another example, liver transplantations are the most commonly performed organ transplantation. Partial transplantations are possible, especially from live donors (e.g. parents) to their children. The amount of tissue that needs to be transplanted depends on the proliferative capacity of the tissue for the donor, to make sure they have sufficient functioning tissue. As well as for the recipient where a too small liver tissue sample leads to insufficient liver function for the child. On the other hand a too large tissue piece can lead to compartment syndrome where the donor liver tissue needs to be removed as it physically compresses other organs (stomach, intestines etc) which can be life threatening as well. Accurately accessing the proliferative power of the donor liver beforehand using organoid growth kinetics may result in less complications and improved postoperative planning after liver transplantations and minimize invasive resections of the donor.

In a further particularly advantageous embodiment, a physical and/or biological property evaluated from a first image taken at a first time t₁ is compared to a corresponding physical and/or biological property evaluated from a second image taken at a second time t₂. From the result of this comparison, the effect of a treatment or other action performed on at least one organoid between times t₁ and t₂ is evaluated.

In a first example, organoids cultured from biopsies from a patient's tumor can be tested for efficacy to inhibit tumor growth or even induce apoptosis using organoid growth kinetics. Furthermore, adverse effects of a therapy on the remaining healthy tissues can be assessed on organoids derived from a biopsy from healthy tissue neighboring the tumor. Simultaneous assessment can provide the information to make a balanced decision regarding efficacy first and adverse effects secondly. As severe adverse effects due to therapy are a major reason for delays in chemotherapeutic protocols, next to improving the patient's health this can also benefit survival. In sum, high through-put experiments are needed together with high-throughput data analyses to be able to make timely decisions and delays of multiple weeks due to analyses are a severe impediment.

In a second example, optimizing the balance between tumor control and the probability of normal tissue side effects is the primary goal of radiation treatment. Therefore, it is imperative to understand the effects that irradiation will have on both normal and cancer tissue. Accessing the effects on growth kinetics with different radiotherapies on individual patient organoids can be used to find an optimal dose for therapy.

In a third example, currently, infectious diseases and drug resistances of microbes are commonly diagnosed and tested using biological sample cultures, including blood. In the future this diagnostic approach can be expanded to primary organoids systems for many pathogens including viruses. The present method lies the foundation for screening a multitude of antibiotics effectiveness and adverse effects on the tissue by measuring organoid growth as a measurement for tissue health.

More recently in the context of the SARS-CoV-2 pandemic, the screening of a multitude of libraries of drugs that are tested in organoids for efficacy in inhibiting viral replication of a newly discovered virus while also taking into account tissue health and function would help a faster and more tailored response at the early stages of a future pandemic. In the future these infectious disease drug screenings will be even more widely applied to organoids. Organoids furthermore provide the opportunity to assess therapeutic interventions to reduce tissue inflammation after viral infection by assessing organoid growth kinetics.

In a further advantageous embodiment, the first neural network and/or section on the one hand, and the second neural network and/or section on the other hand, are executed independently from each other upon demand. In particular, they may be executed in different execution environments on different compute instances. In this manner, the computing power of these compute instances may be more accurately matched to the demand for the respective work.

For example, it depends on the density of organoid instances in the image how many bounding boxes will be produced by the first neural network and/or section. The number of instances determines how much work will be needed for annotation. In particular, in a cloud environment, the determining of masks for individual organoid instances may be fanned out to a plurality of compute instances depending on how many instances have been found. Also, a cloud service provider may already offer the determination of bounding boxes from images as a ready-to-use solution that may be invoked just by placing an API call, with the cloud service provider being responsible for spinning up enough instances. By making use of the cloud in an adaptive manner, the analysis can be further accelerated up to the point that real-time feedback becomes possible. Thus, advantageously, at least one compute instance is a cloud compute instance and/or a cloud service.

Preferably, a ResNet neural network is chosen as the first neural network, as the second neural network, and/or as the one neural network that comprises the first section and the second section. A ResNet network is particularly efficient, and different variants of it provide a scalable trade-off between size (and thus memory requirement) on the one hand, and speed on the other hand. Resnet-34 is a good starting point.

Alternatively, smaller or bigger ResNets (such as ResNet-18, ResNet-50, ResNet-101, ResNet-152) or other 2D CNN architectures could be used. While there is a countless number of different CNN architectures, the ones that are used in practice are the ones that perform the best in certain benchmarks, especially ImageNet.

Exemplary architectures that realistically could be used instead of a ResNet include EfficientNets, InceptionNets, XceptionNets, VGG-Nets, DenseNets, ResNeXt and NFNets.

In a further advantageous embodiment, masks and/or bounding boxes obtained at different times t₁ and t₂ are supplied to a third neural network, to a third section of the one neural network, and/or to another processing unit. The third neural network, the third section of the one neural network, and/or the other processing unit identifies masks that correspond to at least one particular instance of an organoid at the different times t₁ and t₂. Consequently, the position, and/or the size, and/or a physical or biological property and/or activity, of at least one organoid can be tracked based on the masks corresponding to that organoid at different times t₁ and t₂. This allows to study changes that happen to individual organoids and/or to their behavior over time. For example, the local influence of different substances, tumoroids or cells on individual organoids, as well as interactions between individual organoids, can be studied.

Also, in an advantageous embodiment, an interaction, and/or a competition for nutrients, can be evaluated from the tracking of multiple organoids, i.e., from masks corresponding to these organoids at different times t₁ and t₂. For example, the influence of big organoids on the surrounding organoids' growth can be studied.

For example, a long short term memory, LSTM, and/or a recurrent neural network, RNN, may be chosen as the third neural network, and/or as a neural network that further evaluates masks corresponding to one or more instances of organoids at different times t₁ and t₂. These networks can store information over a certain time window. Thus, when such a network determines a new output, a history over this time window may be considered.

Other processing units than neural networks that can be used to identify masks that correspond to particular instances of organoids at different times t₁ and t₂ include generic processing units for object tracking, such as Simple Online Real-Time Tracking, SORT, as well as Transformer Architectures that can take time series as input but do not have a sequential internal structure, allowing for faster training and improved performance.

It is also possible to first determine biological properties of organoids at different times t₁ and t₂, and then input these biological properties into a neural network or other processing unit in order to quantify interactions or the like.

As discussed before, one reason why the processing into bounding boxes and onwards to masks is advantageous is that neural networks may be trained to this task particularly well with the training material that is available in the context of the work on organoids. The invention therefore also provides a method for training at least one neural network and/or section thereof for use in the method described above.

In the course of this method, training images comprising one or more instances of organoids are provided to the neural network and/or section thereof. The instances of organoids in the training images relate to at least two different organ systems.

These training images are mapped to masks that identify the image pixels belonging to each instance of an organoid by the neural network and/or section thereof. A loss function that depends at least in part on a difference between the so-obtained masks on the one hand and given reference masks associated with the training images on the other hand is evaluated. Parameters that characterize the behavior of the neural network and/or section thereof are optimized with the goal that, when further training images are processed, the value of the loss function is likely to improve.

Specifically, the power of the neural network and/or section thereof to generalize to unseen combinations of experimental settings, organoid systems and their heterogeneous phenotypes may be strengthened by supplying a heterogeneous dataset with instances from multiple different organ systems. The overall quality of the training may be further improved by procuring the reference masks from an expert in the field. Labelling by an expert also allows to increase the utilization of the training images. An expert can correctly label organoids out of focus and on the edges, taking full advantage of 3D organoid systems and optimizing the organoids in view.

In a particularly advantageous embodiment, validation images comprising one or more instances of organoids are provided to the trained neural network and/or section thereof. These instances relate to organ systems that are different from the organ systems to which the training images relate. By means of the trained neural network and/or section thereof, the validation images are mapped to masks that identify the image pixels belonging to each instance of an organoid.

Using a predetermined metric, it is rated how well the so-obtained masks match given validation masks associated with the validation images. For example, the mean average precision at a specific intersection over union threshold such as 0.5 (mAP50) between the mask produced by the trained neural network and/or section thereof on the one hand and the validation mask on the other hand may be used. If the rating meets a predetermined criterion, such as a high mAP50 score, it is determined that the trained neural network and/or section thereof is ready for use.

If the rating does not meet the predetermined criterion, it is determined that the trained neural network and/or section thereof is not ready for use. In this case, one possible remedy is to branch back to the training, possibly with more training images.

Herein, the term "validation images " is meant to be used interchangeably with the term "testing images" that is also common in the field of machine learning. A set of validation images on the one hand and a set of testing images on the other hand are both sets of images that have not been used during training. The distinction between the two terms is mainly relevant in settings where
- the performance of the neural network during training is monitored and/or optimized by evaluating the accuracy of its output on an unseen set of images (called "test images" or "validation images"); and
- the performance of the finally trained and/or optimized neural network is evaluated on yet another unseen set of images (called "validation images" if the previous set was "test images", or "test images" if the previous set was "validation images").

For example, the progress of gradient descent optimization may be evaluated at multiple points during the training, such as after each epoch where each training image has been used once. For example,
- the epoch after which the highest performance has been obtained on the unseen set of images may be chosen as the best epoch; and/or
- hyperparameters of the neural network may be optimized to maximize this performance on the unseen set of images; and/or
- the performance on the unseen set of images may be used as a feedback for other aspects of the training, such as the learning rate scheduler, or a reduction of the learning rate upon reaching a plateau.

If the performance measured on the unseen set of images affects the training of the neural network in this or another manner, the performance of the neural network in its finally trained and/or optimized state on this unseen set of images is likely to be higher than it is to be expected in reality across the whole domain of application because of effects that are akin to overfitting on the training images. Therefore, to accurately assess the performance in the whole domain of application, it is advantageous to use a second unseen set of images that is distinct from the first one.

The organ systems to which the organoids in the training images, and/or in the validation images, relate may, for example, comprise at least two different of:
- an intestinal system;
- a lung system;
- a hepatocyte system;
- a cholangiocyte system;
- a tumoroid system;
- a tubuloid system; and
- a biliary system.

In a further advantageous embodiment, the training images, and/or the validation images, are chosen to comprise images acquired by different laboratories, and/or with different microscopes. In this manner, the variability of the training data is further increased. In particular, the ability of the neural network and/or section thereof to generalize to different combinations of organoid system, phenotype and experimental settings is improved. As discussed before, the number of different combinations is so high that the power to generalize is particularly important.

In a further advantageous embodiment, a transformation is applied to a training image. This produces a new training image. Based on reference masks associated with the original training image, changes to the appearance of organoids produced by the image transformation, and/or spatial-level augmentations, reference masks for the new training image are determined. The new training image and its associated reference masks are included in the training of the neural network and/or section thereof. That is, the training data is augmented with the new training image. Since the reference masks for the new training image are automatically determined from the reference masks associated with the original training image, the variability in the dataset is increased without having to perform further manual labelling of the new training images. Also, the neural network and/or part thereof may be specifically trained to produce results that are invariant or equivariant with respect to certain image transformations.

For example, pixel-level augmentations such as random hue and saturation shifts, as well as brightness and contrast changes, only change the appearance of the image, but not the content. The masks outputted by the neural network and/or section thereof for the transformed training image should be exactly the same as the masks outputted for the original training image. This means that the reference masks of the original training image may be re-used for the new training image without changes.

For example, spatial-level augmentations such as random 90 degree horizontal and vertical flips, scalings and shifts change the positions and/or sizes of organoids. Therefore, when applying these transformations to a training image, the reference masks should be transformed in the same manner to match the new training image.

The training of the neural network and/or section thereof need not start from scratch, such as from a random initialization. Rather, it may start from pre-trained network parameters that have been obtained by training on a generic object detection dataset. One example of such a dataset is the Common Objects in Context (COCO) dataset. Likewise, a neural network and/or section thereof that is used for object tracking (i.e., identifying masks that correspond to at least one particular instance of an organoid at the different times t₁ and t₂) may also be obtained in a pre-trained state.

If a further neural network outputs the development of the position, and/or the size, and/or a physical or biological property and/or activity, of at least one organoid between times t₁ and t₂; and/or interactions and competitions between organoids, the interactions and competitions delivered by this further neural network may be compared with reference interactions and reference competitions, and based on the differences, another term may be incorporated into the loss function for the training. But this further network may also, for example, be directly obtained in an already trained state, so this may remain fixed while the rest of the network or networks is being trained.

The methods may be wholly or partially computer-implemented. The invention therefore also relates to one or more computer programs that, when executed by one or more computers and/or computerized execution environments, cause the one or more computers and/or execution environments to perform one of the methods described above.

A computerized execution environment may, for example, be configured to run software containers in which an application may be deployed in a self-contained manner.

The invention also provides one or more non-transitory storage media and/or download products with the one or more computer programs. A download product is a product that may be sold in an online shop for immediate fulfillment by download. The invention also provides one or more computers and/or computerized execution environments with the one or more computer programs, and/or with the one or more non-transitory machine-readable storage media and/or download products.

### Description of the Figures

In the following, the invention is illustrated using Figures without any intention to limit the scope of the invention. The Figures show:
Figure 1: Exemplary embodiment of the method 100 for quantifying and/or analyzing organoids;
Figure 2: Determining masks 6 for instances 7 of organoids on an exemplary microscope image 2 of a biological sample 1;
Figure 3: Two-stage process for obtaining masks 6 via bounding boxes 5;
Figure 4: Exemplary embodiment of the method 200 for training a neural network 3a-3c, 4 or section 4a-4c thereof.

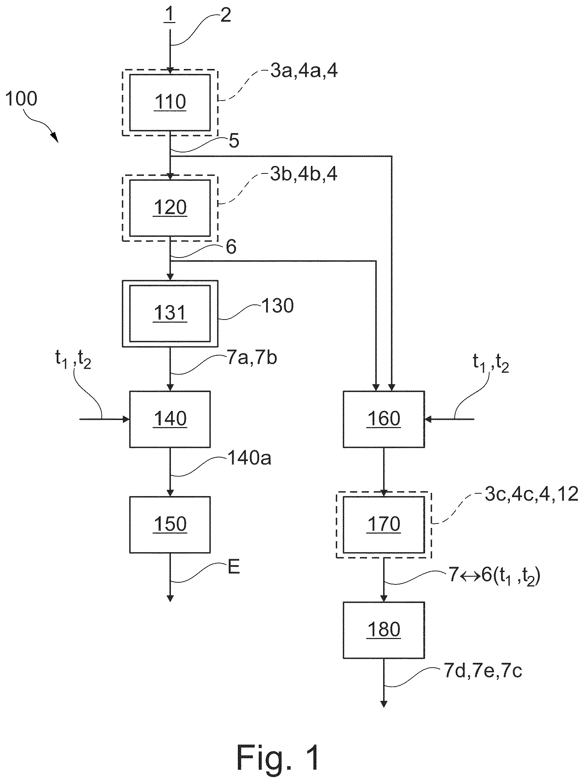

Figure 1 is a schematic flow chart of an exemplary embodiment of the method 100 for quantifying and/or analyzing organoids from a digital image 2 of a biological sample 1.

In step 110, the image 2 is mapped to bounding boxes 5 that enclose instances of organoids by a first neural network 3a and/or a first section 4a of one neural network 4.

In step 120, for each bounding box 5, the content of this bounding box 5, and/or a work product of the first neural network 3a and/or first section 4a that relates to this bounding box 5, is mapped to one or more masks 6 that identify the image pixels belonging to each instance 7 of an organoid. This is done by a second neural network 3b and/or a second section 4b of the one neural network 4.

In step 130, from the one or more masks 6, a number 7a of instances 7 of organoids in the image, and/or at least one physical and/or biological property 7b of at least one instance 7 of an organoid, is evaluated. In particular, according to block 131, a biological activity of the organoid at the time of acquisition of the image 2 may be evaluated from the shape of the border of the organoid.

In step 140, a physical and/or biological property 7b evaluated from a first image 2 taken at a first time t₁ is compared to a corresponding physical and/or biological property 7b evaluated from a second image 2 taken at a second time t₂. In step 150, the effect E of a treatment or other action performed on at least one organoid between times t₁ and t₂ is evaluated from the result 140a of said comparison.

In step 160, masks 6 and/or bounding boxes 5 obtained at different times t₁ and t₂ are supplied to a third neural network 3c and/or a third section 4c of the one neural network 4, and/or to another processing unit 12. In step 170, the third neural network 3c, the third section 4c of the one neural network 4, and/or the other processing unit 12, identifies masks 6 that correspond to at least one particular instance 7 of an organoid at the different times t₁ and t₂. In step 180, from the masks 6 that correspond to at least one particular instance 7 of an organoid at the different times t₁ and t₂,
- the position, and/or the size, and/or a physical or biological property and/or activity 7c, of at least one organoid; and/or
- an interaction 7d, and/or a competition 7e for nutrients, between multiple organoids,
is evaluated.

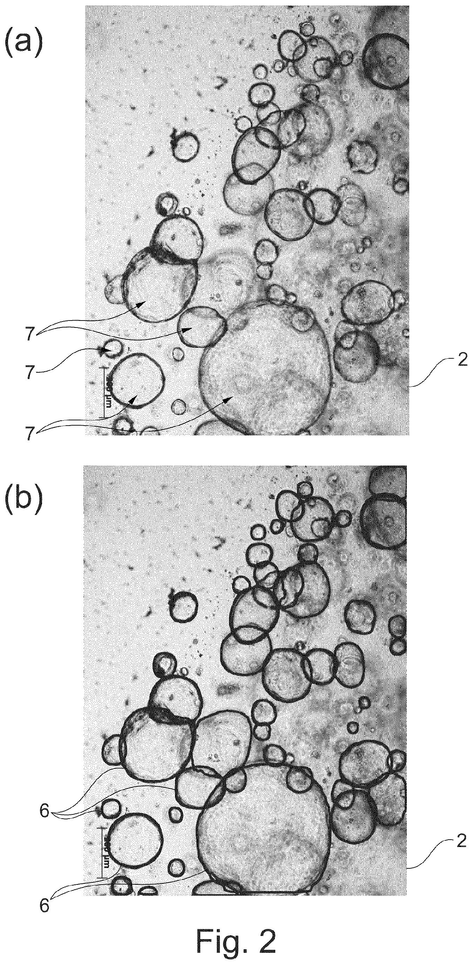

Figure 2 shows one example where masks 6 for instances 7 of organoids have been determined on an exemplary microscope image 2 of a biological sample 1. Figure 2a shows only the microscope image 2 where many instances 7 of organoids are visible. For the sake of readability, only a few of these instances have been labelled with the reference sign 7.

Figure 2b shows the masks 6 determined using the method 100 overlaid on the microscope image 2. For the sake of readability, only the border of each mask 6 is shown in Figure 2b. Also, only a few masks have been labelled with the reference sign 6.

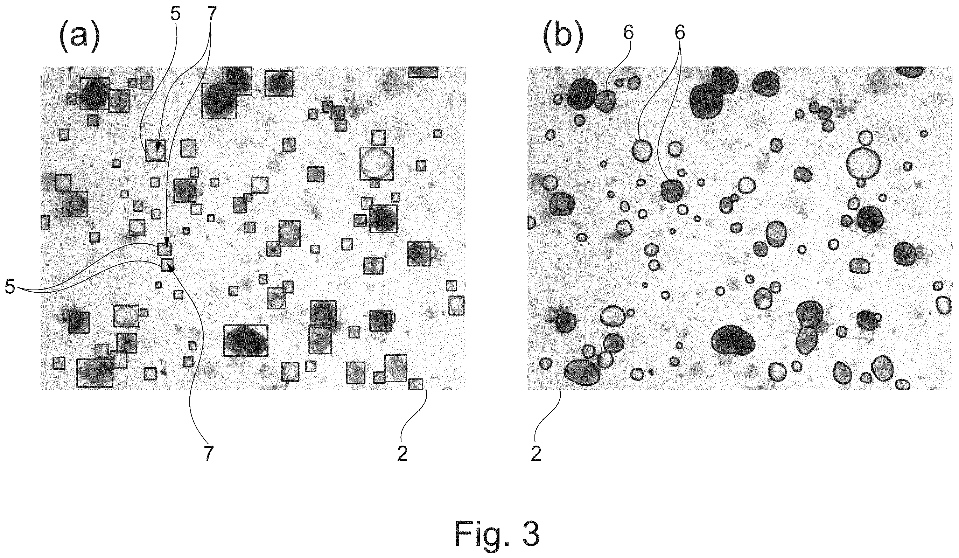

Figure 3 illustrates the two-stage process by which first bounding boxes 5 and then masks 6 are obtained.

Figure 3a shows a microscope image 2 where multiple instances 7 of organoids are visible. For each instance 7, a bounding box 5 enclosing this instance is determined. For the sake of clarity, only a few instances and bounding boxes are labelled with reference signs 7 and 5, respectively.

Figure 3b shows the same microscope image with the masks 6, rather than the bounding boxes 5, overlaid on it. Akin to Figure 2b, only the border of each mask 6 is shown, and only a few exemplary masks are labelled with the reference sign 6. The border of each mask 6 accurately matches the border of the respective instance 7. Therefore, the masks 6 are usable for analyzing properties and activities at the border of each instance 7, such as proliferation or interaction with other organoids.

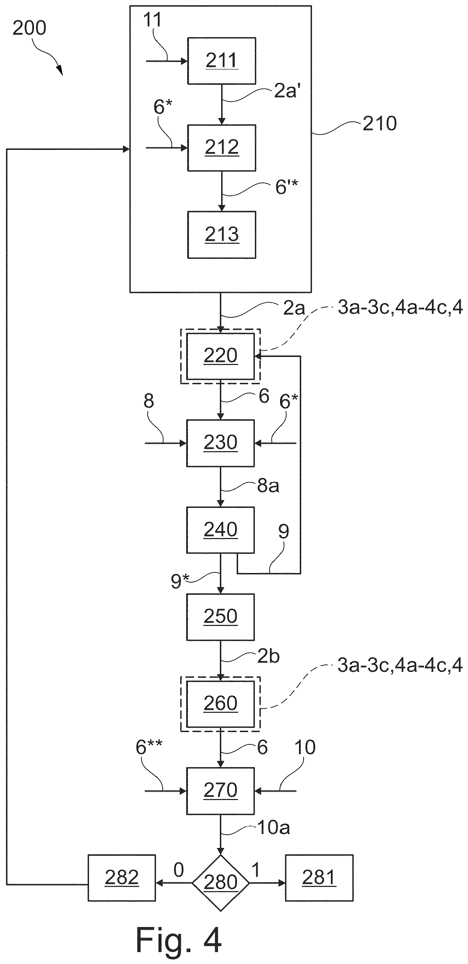

Figure 4 is a schematic flow chart of an exemplary embodiment of the method 200 for training at least one neural network 3a-3c, 4, and/or at least one section 4a-4c thereof.

In step 210, training images 2a comprising one or more instances 7 of organoids are provided to the neural network 3a-3c, 4 and/or section 4a-4c thereof. The instances 7 of organoids 7 relate to at least two different organ systems.

Inside box 210, it is exemplarily shown how the training dataset may be augmented. According to block 211, an image transformation 11 may be applied to a training image 2a, thereby producing a new training image 2a'. According to block 212, based on reference masks 6* associated with the training image 2a and changes to the appearance of organoids produced by the image transformation 10, reference masks 6'* for the new training image 2a' may be determined. According to block 213, the new training image 2a' and the associated reference masks 6'* may be included in the training of the neural network 3a-3c, 4 and/or section 4a-4c thereof.

In step 220, the neural network 3a-3c, 4 and/or section 4a-4c thereof, maps the training images 2a to masks 6 that identify the image pixels belonging to each instance 7 of an organoid.

In step 230, a loss function 8 is evaluated. This loss function 8 depends at least in part on a difference between the masks 6 on the one hand and given reference masks 6* associated with the training images 2a on the other hand.

In step 240, parameters 9 that characterize the behavior of the neural network 3a-3c, 4 and/or section 4a-4c thereof are optimized with the goal that, when further training images 2a are processed, the value 8a of the loss function 8 is likely to improve. The finally optimized state of the parameters 9 is labelled with the reference sign 9*.

In step 250, validation images 2b comprising one or more instances 7 of organoids are provided to the trained neural network 3a-3c, 4 and/or section 4a-4c thereof. The instances 7 used here relate to organ systems that are different from the organ systems to which the training images 2a relate.

In step 260, the trained neural network 3a-3c, 4 and/or section 4a-4c thereof maps the validation images 2b to masks 6 that identify the image pixels belonging to each instance 7 of an organoid.

In step 270, a predetermined metric 10 rates how well the so-obtained masks 6 match given validation masks 6** associated with the validation images 2b. The rating 10a is checked against a predetermined criterion in step 280. If the criterion is met (truth value 1), then, in step 281, it is determined that the trained neural network 3a-3c, 4 and/or section 4a-4c thereof is ready for use. If the criterion is not met (truth value 0), then, in step 282, it is determined that the trained neural network 3a-3c, 4 and/or section 4a-4c thereof is not ready for use. In this case, one potential remedy is to branch back to further training.

### List of reference signs

- 1: biological sample
- 2: digital image of sample 1
- 2a: training images
- 2a': new training image produced during data augmentation
- 2b: validation images
- 3a-3c: multiple neural networks
- 4: one single neural network
- 4a-4c: sections of network 4
- 5: bounding boxes
- 6: masks identifying image pixels that belong to organoid instances 7
- 6*: reference masks
- 6'*: reference masks for new training image 2a'
- 6**: validation masks
- 7: instances of organoids
- 7a: number of instances
- 7b: physical and/or biological property of instance 7
- 7c: activity of instance 7
- 7d: interaction between organoids
- 7e: competition between organoids
- 8: loss function
- 8a: value of loss function
- 9: parameters of network 3a-3c, 4, section 4a-4c
- 9*: finally optimized state of parameters 9
- 10: metric for match with validation masks 6**
- 10a: outcome of metric 10
- 11: image transformation
- 12: other processing unit for matching masks 6 to instances 7
- 100: method for quantifying and/or analyzing organoids
- 110: mapping image 2 to bounding boxes 5
- 120: determining masks 6
- 130: evaluating instance number 7a, properties 7b
- 131: evaluating biological activity from shape of border
- 140: comparing property 7b for points in time t1, t2
- 150: evaluating effect E of treatment or other action
- 160: supplying masks 6, bounding boxes 5 to third network 3c / third section 4c
- 170: identifying masks 6 belonging to organoid at different times t₁ and t₂
- 180: evaluating masks 6 associated with individual organoids
- 200: method for training network 3a-3c, 4, section 4a-4c
- 210: providing training images 2a
- 220: mapping training images 2a to masks 6
- 230: evaluating loss function 8
- 240: optimizing parameters 9
- 250: providing validation images 2b
- 260: mapping validation images 2b to masks 6
- 270: rating masks 6 against validation masks 6**
- 280: criterion for outcome 10a of rating 10
- 281: determining that network/section is ready for use
- 282: determining that network/section is not ready for use
- t₁, t₂: points in time
- E: effect of treatment or other action

## Claims

1. A method (100) for quantifying and/or analyzing organoids from a digital image (2) of a biological sample (1), comprising the steps of:
• mapping (110), by a first neural network (3a) and/or a first section (4a) of one neural network (4), the image (2) to bounding boxes (5) that enclose instances of organoids;
• mapping (120), by a second neural network (3b) and/or a second section (4b) of the one neural network (4), for each bounding box (5), the content of this bounding box (5), and/or a work product of the first neural network (3a) and/or first section (4a) that relates to this bounding box (5), to one or more masks (6) that identify the image pixels belonging to each instance (7) of an organoid; and
• evaluating (130), from the one or more masks (6), a number (7a) of instances (7) of organoids in the image, and/or at least one physical and/or biological property (7b) of at least one instance (7) of an organoid.

2. The method (100) of claim 1, wherein the physical and/or biological property (7b) comprises one or more of:
• a size and/or growth of the organoid;
• a shape of the border of the organoid;
• a composition of the organoid, and/or a heterogeneity thereof;
• an optical property of the organoid, and/or a heterogeneity thereof;
• a density of the organoid, and/or a heterogeneity thereof; and
• a differentiation state, and/or a proliferation state, of the organoid.

3. The method of claim 2, further comprising: evaluating (131), from the shape of the border of the organoid, a biological activity of the organoid at the time of acquisition of the image (2).

4. The method (100) of any one of claims 1 to 3, further comprising:
• comparing (140) a physical and/or biological property (7b) evaluated from a first image (2) taken at a first time t₁ to a corresponding physical and/or biological property (7b) evaluated from a second image (2) taken at a second time t₂; and
• evaluating (150), from the result (140a) of this comparison, the effect (E) of a treatment or other action performed on at least one organoid between times t₁ and t₂.

5. The method (100) of any one of claims 1 to 4, further comprising: executing the first neural network (3a) and/or section (4a) on the one hand, and the second neural network (3b) and/or section (4b) on the other hand, independently from each other on demand

6. The method (100) of claim 5, wherein the first neural network (3a) and/or section (4a) on the one hand, and the second neural network (3b) and/or section (4b) on the other hand, are executed in different execution environments on different compute instances, and at least one compute instance is a cloud compute instance and/or a cloud service.

7. The method (100) of any one of claims 1 to 6, wherein a ResNet neural network is chosen as the first neural network (3a), as the second neural network (3b), and/or as the one neural network (4).

8. The method (100) of any one of claims 1 to 7, further comprising:
• supplying (160) masks (6) and/or bounding boxes (5) obtained at different times t₁ and t₂ to a third neural network (3c), to a third section (4c) of the one neural network (4), and/or to another processing unit (12); and
• identifying (170), by the third neural network (3c), the third section (4c) of the one neural network (4), and/or the other processing unit (12), masks (6) that correspond to at least one particular instance (7) of an organoid at the different times t₁ and t₂.

9. The method (100) of claim 8, further comprising: evaluating (180), from masks (6) corresponding to one or more instances (7) of organoids at different times t₁ and t₂,
• the development of the position, and/or the size, and/or a physical or biological property and/or activity (7c), of at least one organoid between times t₁ and t₂; and/or
• an interaction (7d), and/or a competition (7e) for nutrients, between multiple organoids.

10. The method (100) of any one of claims 8 to 9, wherein a long short-term memory, LSTM, and/or a recurrent neural network, RNN, is chosen as the third neural network (3c), and/or as a neural network that performs the evaluating (180) of masks (6) corresponding to one or more instances (7) of organoids at different times t₁ and t₂.

11. A method (200) for training at least one neural network (3a-3c, 4) and/or section (4a-4c) thereof for use in the method (100) of any one of claims 1 to 10, comprising the steps of:
• providing (210), to the neural network (3a-3c, 4) and/or section (4a-4c) thereof, training images (2a) comprising one or more instances (7) of organoids, wherein these instances (7) relate to at least two different organ systems;
• mapping (220), by the neural network (3a-3c, 4) and/or section (4a-4c) thereof, the training images (2a) to masks (6) that identify the image pixels belonging to each instance (7) of an organoid;
• evaluating (230) a loss function (8) that depends at least in part on a difference between the so-obtained masks (6) on the one hand and given reference masks (6*) associated with the training images (2a) on the other hand; and
• optimizing (240) parameters (9) that characterize the behavior of the neural network (3a-3c, 4) and/or section (4a-4c) thereof with the goal that, when further training images (2a) are processed, the value (8a) of the loss function (8) is likely to improve.

12. The method (200) of claim 11, further comprising:
• providing (250), to the trained neural network (3a-3c, 4) and/or section (4a-4c) thereof, validation images (2b) comprising one or more instances (7) of organoids, wherein these instances (7) relate to organ systems that are different from the organ systems to which the training images (2a) relate;
• mapping (260), by the trained neural network (3a-3c, 4) and/or section (4a-4c) thereof, the validation images (2b) to masks (6) that identify the image pixels belonging to each instance (7) of an organoid;
• rating (270), using a predetermined metric (10), how well the so-obtained masks (6) match given validation masks (6**) associated with the validation images (2b); and
• if the rating meets a predetermined criterion (280), determining (281) that the trained neural network (3a-3c, 4) and/or section (4a-4c) thereof is ready for use; whereas,
• if the rating does not meet the predetermined criterion (280), determining (282) that the trained neural network (3a-3c, 4) and/or section (4a-4c) thereof is not ready for use.

13. The method (200) of any one of claims 11 to 12, wherein the organ systems comprise at least two different of:
• an intestinal system;
• a lung system;
• a hepatocyte system;
• a cholangiocyte system;
• a tumoroid system;
• a tubuloid system; and
• a biliary system.

14. The method (200) of any one of claims 11 to 13, wherein the training images (2a), and/or the validation images (2b), are chosen to comprise images acquired by different laboratories, and/or with different microscopes.

15. The method (200) of any one of claims 11 to 14, further comprising:
• applying (211), to a training image (2a), an image transformation (11), thereby producing a new training image (2a');
• determining (212), based on reference masks (6*) associated with the training image (2a), changes to the appearance of organoids produced by the image transformation (10), and/or spatial-level augmentations,, reference masks (6'*) for the new training image (2a'); and
• including (213) the new training image (2a') and the new reference masks (6'*) in the training of the neural network (3a-3c, 4) and/or section (4a-4c) thereof.
